Europäisches Patentamt
European Patent Office
Office européen des brevets

(11) Veröffentlichungsnummer: **0 285 902**
**A2**

(12) # EUROPÄISCHE PATENTANMELDUNG


(21) Anmeldenummer: **88104575.1**

(51) Int. Cl.⁴: **H04N 7/13 , H04N 7/137**

(22) Anmeldetag: **22.03.88**

(30) Priorität: **07.04.87 DE 3711627**

(43) Veröffentlichungstag der Anmeldung: **12.10.88 Patentblatt 88/41**

(84) Benannte Vertragsstaaten: **AT BE CH DE FR GB IT LI LU NL SE**



(71) Anmelder: **Siemens Aktiengesellschaft Berlin und München**
**Wittelsbacherplatz 2**
**D-8000 München 2(DE)**

(72) Erfinder: **Hammer, Bernard, Dr.**
**Geigelsteinstrasse 24**
**D-8098 Pfaffing(DE)**
Erfinder: **von Brandt, Achim, Dr.**
**Adalbertstrasse 78**
**D-8000 München 40(DE)**


(54) **Verfahren zur Datenreduktion digitaler Bildsequenzen.**


(57) Ein Verfahren zur Datenreduktion digitaler Bildsequenzen in hierarchischer Weise mittels eines mehrstufigen Coders durch Vektorquantisierung und Bewegungskompensation sowie Rekonstruktion dieser Bildsequenzen mittels eines mehrstufigen Decoders. Ein Eingangsbildsignal wird durch eine Kaskade von L gleichen Tiefpaßfiltern mit anschließender Unterabtastung in einer Anzahl von Bildsignalen unterschiedlicher Ortsauflösung dargestellt, wobei mit jeder Kaskadenstufe die Ortsauflösung und das Datenvolumen des Eingangsbildsignals in horizontaler und vertikaler Richtung jeweils um einen Faktor R reduziert werden und wobei das Eingangssignal mit "Auflösungsstufe L" und das tiefpaßgefilterte Bildsignal mit der kleinsten Auflösung mit "Auflösungsstufe Ø" bezeichnet werden. Das zeitlich vorangehende, rekonstruierte, bewegungskompensierte Bildsignal wird in gleicher Weise in einer Anzahl von Bildsignalen unterschiedlicher Ortsauflösung dargestellt. Die Abtastwerte der Auflösungsstufen werden in Blöcke unterteilt, wobei die "Auflösungsstufe Ø" die Blockgröße "1×1" hat und für die folgenden mit jeder weiteren Auflösungsstufe die Blockgröße um den Faktor R horizontal und vertikal erhöht wird, jedoch ein Block maximal die Blockgröße N×N annimmt.


FIG 16

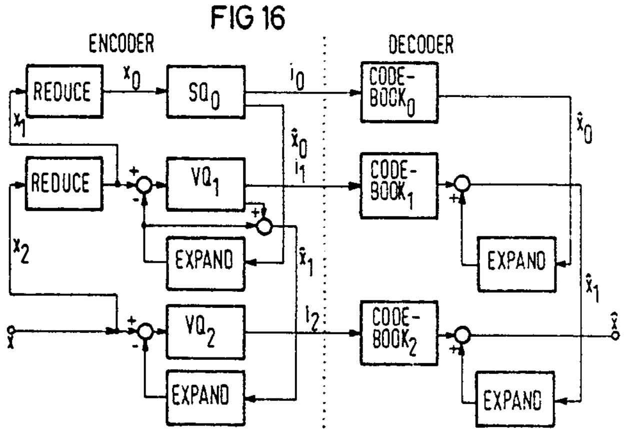


EP 0 285 902 A2

# Verfahren zur Datenreduktion digitaler Bildsequenzen

Die vorliegende Erfindung betrifft ein Verfahren zur Datenreduktion digitaler Bildsequenzen in hierarchischer Weise mittels eines mehrstufigen Coders durch Vektorquantisierung und Bewegungskompensation sowie Rekonstruktion dieser Bildsequenzen mittels eines mehrstufigen Decoders.

Es sind verschiedene Verfahren zur adaptiven Interframe-Vektorquantisierung mit Vektordimensionen von 3 bis 24 bekannt, vergl. Conference Publication No. 265, S. 200-204, KDD Research & Development Laboratories, Japan, H. Yamaguchi, M. Wada, H. Yamamoto: "64 KB/S INTEGRATED VISUAL TELECOMMUNICATION SYSTEM" bzw. ICASSP 86, Tokyo, ANNEX F, S. 133-136, Mitsubishi Electric Corporation, Tokumichi Murakami, Kohtaro Asai, Atsushi Itoh: "VECTOR QUANTIZATION OF COLOR IMAGES", bei denen die Luminanz-und Farbkomponenten geschlossen quantisiert werden. Zur Erhöhung der Datenreduktion werden die Bild-zu-Bild-Differenzen durch Bewegungskompensation (Blockmatching-Verfahren) und Hintergrundprädiktion (KDD) reduziert.

Diese bekannten Verfahren zerlegen ein Bild einer Bildfolge in relativ kleine Blöcke von $1 \times 1$ (KDD) bzw. $4 \times 4$ Bildpunkten (Mitsubishi), die unabhängig voneinander verarbeitet werden. Durch eine Erhöhung der Blockgröße läßt sich zwar die Datenreduktion einer Vektorquantisierung (VQ) erhöhen, jedoch sind damit ein exponentieller Anstieg des Rechenaufwandes sowie eine schlechtere Anpassung an die Instationarität von Bilddaten verbunden.

Der vorliegenden Erfindung liegt die Aufgabe zugrunde, ein Verfahren der eingangs genannten Art und gemäß dem Oberbegriff des Patentanspruchs 1 zu schaffen, mittels dessen eine wirksame Datenreduktion durchgeführt werden kann, bei der keine störenden Blockartefakte, insbesondere im Falle von Bildern mit hohem Bewegtanteil, in dem rekonstruierten Bild auftreten und mittels welchen Verfahrens im Vergleich zu den bisher bekannten Verfahren dieser Art größere Bereiche des Originalbildes zwecks Datenreduktion durch Vektorquantisierung erfaßt werden können.

Die der Erfindung zugrunde liegende Aufgabe wird durch ein Verfahren zur Datenreduktion digitaler Bildsequenzen in hierarchischer Weise mittels eines mehrstufigen Coders durch Vektorquantisierung und Bewegungskompensation sowie Rekonstruktion dieser Bildsequenzen mittels eines mehrstufigen Decoders gelöst, daß dadurch gekennzeichnet ist, daß in an sich bekannter Weise ein Eingangsbildsignal durch eine Kaskade von L gleichen Tiefpaßfiltern mit anschließender Unterabtastung in einer Anzahl von Bildsignalen unterschiedlicher Ortsauflösung dargestellt wird, wobei mit jeder Kaskadenstufe die Ortsauflösung und das Datenvolumen des Eingangsbildsignals in horizontaler und vertikaler Richtung jeweils um einen Faktor R reduziert werden und wobei das Eingangsbildsignal mit "Auflösungsstufe L" und das tiefpaßgefilterte Bildsignal mit der kleinsten Auflösung mit "Auflösungsstufe 0" bezeichnet werden, daß das zeitlich vorangehende, rekonstruierte, bewegungskompensierte Bildsignal in gleicher Weise in einer Anzahl von Bildsignalen unterschiedlicher Ortsauflösung dargestellt wird, daß die Abtastwerte der Auflösungsstufen in Blöcke unterteilt werden, wobei die "Auflösungsstufe 0" die Blockgröße "$1 \times 1$" hat und für die folgenden mit jeder weiteren Auflösungsstufe die Blockgröße um den Faktor R horizontal und vertikal erhöht wird, jedoch ein Block maximal die Blockgröße $N \times N$ annimmt, daß korrespondierende Bildsignale des Eingangsbildsignals und des rekonstruierten, bewegungskompensierten Bildsignals beginnend mit "Auflösungsstufe 0" sukzessive jeweils miteinander verglichen werden, wobei die Vergleichsvorgänge blockweise durchgeführt werden, und daß sobald die Differenz korrespondierender Bildsignale einen vorgegebenen Schwellwert überschreitet, eine Umschaltung des Codiermodus erfolgt, wobei von der aktuellen Auflösungsstufe des Eingangsbildsignals an beginnend die Differenz zu der interpolierten vorausgegangenen Auflösungsstufe des Eingangsbildsignals gebildet wird, wobei die Interpolation mehrstufig erfolgt, und sobald die im folgenden zu bildende Differenz einen vorgegebenen Schwellwert überschreitet, die Differenz quantisiert und ausgegeben wird, wobei in der "Auflösungsstufe 0" die Differenz skalar quantisiert wird und in allen weiteren "Auflösungsstufen 1...L" die Differenz vektorquantisiert wird.

Das erfindungsgemäße Verfahren beseitigt die den Verfahren gemäß dem Stand der Technik anhaftenden Nachteile durch eine Kombination verschiedener suboptimaler VQ-Techniken, wie "Multistage"-VQ, "Teilband"-VQ sowie "Mean-Separated"-und "Gain-Shape"-VQ.

Der für das erfindungsgemäße Verfahren zu verwendende Coder gestattet einen progressiven Bildaufau aus einer Folge von Tiefpaßfiltern, deren Luminanz-und Farbkomponenten in Vektoren der Dimensionen 3 bis 24 geschlossen quantisiert werden. Durch das kaskadierte VQ-Konzept können die statistischen Abhängigkeiten von $32 \times 32$ pel großen Blöcken sukzessive zur Datenreduktion genutzt werden. Die starken statistischen Abhängigkeiten aufeinanderfolgender Bilder in wenig oder nicht bewegten Bildbereichen werden durch VQ der bewegungskompensierten Bild-zu-Bild-Differenzen der Teilbänder berücksichtigt.

Vorteilhafte Weiterbildungen der vorliegenden Erfindung sind durch die in den Unteransprüchen angegebenen Merkmale gekennzeichnet.

Im folgenden wird die vorliegende Erfindung anhand mehrerer, bevorzugte Ausführungsbeispiele für die vorliegende Erfindung betreffender Figuren im einzelnen beschrieben

FIG 1 zeigt eine schematische Darstellung einer pyramidenförmigen Auflösungsstruktur mit mehreren Ebenen 0...2, aus der die Art und Weise hervorgeht, wie von Ebene zu Ebene der Grad der Auflösung eines Bildes oder eines Bildblocks geändert wird, wobei in der genannten Darstellung in Ebene 2 die größte Auflösung des Bildes oder Bildblocks vorliegt. (Ein vergleichbares Auflösungsänderungsschema ist bereits aus IEEE TRANSACTIONS ON COMPUTERS, VOL. C-28, NO. 11, November 1979, S. 871 ff "Progressive Refinement of Raster Images" bekannt).

FIG 2 zeigt eine schematische Darstellung der Unterteilung eines Bildes bei Anwendung des erfindungsgemäßen hierarischen mehrstufigen Vektorquantisierungsverfahrens HMVQ gemäß einem bevorzugten Ausführungsbeispiel für die vorliegende Erfindung, wobei für Ebenen 0... 5 die jeweils anzuwendende Anzahl von Abtastungen angegeben ist.

FIG 3 zeigt ein Blockschaltbild eines erfindungsgemäßen Coders für das HMVQ-Verfahren.

FIG 4 zeigt ein Blockschaltbild, aus dem ins einzelne gehend der Aufbau einer ersten Stufe einer Vektorquantisiererkomponente des HMVQ-Coders hervorgeht.

FIG 5 zeigt ein Blockschaltbild, aus dem ins einzelne gehend der Aufbau einer Zwischenstufe einer Vektorquantisiererkomponente des HMVQ-Coders hervorgeht.

FIG 6 zeigt ein Blockschaltbild, aus dem ins einzelne gehend der Aufbau einer letzten Stufe einer Vektorquantisiererkomponente des HMVQ-Coders hervorgeht.

FIG 7 zeigt ein Blockschaltbild einer Bewegungsanalyse-Einheit des HMVQ-Coders.

FIG 8 zeigt eine schematische Darstellung eines Funktionsablaufs für eine Bewegt/Unbewegt-Segmentierung gemäß dem erfindungsgemäßen Verfahren.

FIG 9 zeigt eine suchbaumähnliche - schematische Struktur mit sechs Hierarchie-Stufen 0... 5, die eine Datenstruktur eines 32×32 pel-Blocks im Rahmen des HMVQ-Verfahrens darstellt.

FIG 10 zeigt eine erläuternde Darstellung der Beziehungen der verschiedenen Codier-Modi und deren Übergänge.

Fig 11 zeigt ein Blockschaltbild eines für das erfindungsgemäße Verfahren verwendbaren HMVQ-Decoders.

FIG 12 zeigt ein Blockschaltbild einer ersten Stufe einer Rekonstruktionseinheit des HMVQ-Decoders.

FIG 13 zeigt ein Blockschaltbild einer Zwischenstufe der Rekonstruktionseinheit des HMVQ-Decoders.

FIG 14 zeigt ein Blockschaltbild einer Endstufe der Rekonstruktionseinheit des HMVQ-Decoders.

FIG 15 zeigt eine prinzipielle Darstellung einer Zwei-Paß-Blocküberlappungs-Interpolation im Rahmen des erfindungsgemäßen Verfahrens.

FIG 16 zeigt eine prinzipielle Gesamtdarstellung der hierarchischen, mehrstufigen Vektorquantisierung im Rahmen des HMVQ-Verfahrens gemäß der vorliegenden Erfindung.

Wie bereits erläutert, zeigt FIG 1 eine pyramidenförmige schematische Darstellung mit mehreren Ebenen 0... 2, aus der die Art und Weise hervorgeht, wie verschiedene Auflösungen des Bildes oder Bildblocks durchgeführt werden. Wie ebenfalls bereits erläutert, zeigt FIG 2 eine weitere schematische Darstellung, aus der hervorgeht, wie ein Bild oder Bildblock unterschiedlich in mehreren Ebenen gemäß der vorliegenden Erfindung aufzulösen ist.

FIG 3 zeigt, wie bereits erläutert, ein Blockschaltbild eines Coders, wie er in dem erfindungsgemäßen HMVQ-Verfahren zur Anwendung kommt. Dieses Blockschaltbild, das lediglich ein bevorzugtes Ausführungsbeispiel darstellt, zeigt eine Klemme "Video-Eingang", die mit einem A/D-Wandler 11 verbunden ist. Der Ausgang des A/D-Wandlers 11 ist einerseits mit einem Signaleingang einer letzten VQ-Stufe (Vektorquantisiererstufe) 15 und andererseits mit dem Eingang einer Bewegungsanalyse-Einheit 16 verbunden. Die letzte VQ-Stufe 15 bildet zusammen mit einer ersten VQ-Stufe 12 und mehreren Zwischen-VQ-Stufen 13... 14 eine kaskadenartig zusammengeschaltete Vektorquantisiereranordnung. Dem bereits genannten Signaleingang der letzten VQ-Stufe 15 wird von dem A/D-Wandler 11 ein Signal x zugeführt. Ein Ausgang der letzten VQ-Stufe 15 gibt ein Signal $x_l$ aus, das einem Signaleingang einer Zwischen-VQ-Stufe 14 zugeführt wird. Ein Ausgang dieser Zwischen-VQ-Stufe 14 gibt ein Signal $x_{l-1}$ ab, welches einer weiteren Zwischen-VQ-Stufe 13 innerhalb dieser kaskadenartigen Anordnung zugeführt wird. Ein Ausgang dieser Zwischen-VQ-Stufe 13 liefert schließlich ein Signal $x_1$ an einen Eingang einer ersten VQ-Stufe 12. Die Bewegungsanalyse-Einheit 16 gibt über einen ersten Ausgang ein Signal s jeweils an einen weiteren Eingang aller der genannten VQ-Stufen 12... 15 ab. Jeweils ein erster Ausgang der letzen VQ-Stufe 15, der Zwischen-VQ-Stufe 14..., und der weiteren Zwischen-VQ-Stufe 13 gibt ein Signal c an einen weiteren Eingang der jeweils in der Kaskade vorgeordneten VQ-Stufe ab. Jeweils ein weiterer Ausgang der VQ-Stufen 12... 14 gibt ein Ausgangssignal m. x an einen weiteren Eingang der jeweilig in der Kaskade nachgeordneten VQ-Stufe 13... 15 ab. Jeweils einem weiteren Signaleingang der VQ-Stufen 13... 15 wird ein Signal b, nämlich ein sog. Pufferregelsignal, das von einem Pufferspeicher 19 abgegeben wird, zugeführt. Schließlich wird über jeweils einen weiteren Ausgang aller VQ-Stufen 12... 15 und der Bewegungsanalyse-Einheit 16 ein Ergebnissignal i, m bzw. v an je einen Signaleingang eines Multiplexers 17 ausgegeben. Der Ausgang des Multiplexers 17 ist mit einem Coder 18 verbunden, dessen Ausgang mit dem bereits erwähnten Pufferspeicher 19 verbunden ist. Der Ausgang des Pufferspeichers 19 ist mit einer Klemme "Datenausgang" verbunden.

Wie bereits erläutert, zeigt FIG 4 ein ins einzelne gehendes Blockschaltbild der ersten VQ-Stufe 12. Wie ersichtlich, wird dem Eingang dieser Schaltungsanordnung das bereits erwähnte Signal $x_t$ einer Reduktionseinheit 1201 zugeführt, deren Ausgang mit einem Speicher 1202 verbunden ist. Der Ausgang dieses Speichers 1202 ist mit einem von zwei Signaleingängen eines Subtraktionsgliedes 1203 verbunden. Der Ausgang dieser Subtraktionsgliedes ist mit dem Eingang einer Schwellenschaltung 1204 verbunden, deren einer Ausgang mit einem Skalarquantisierer 1205 verbunden ist. Ein Ausgang dieses Skalarquantisierers 1205 ist mit dem Eingang eines weiteren Speichers 1206 verbunden, dessen Ausgang mit einer Klemme $i_0$ verbunden ist. Ein weiterer Ausgang des Skalarquantisierers 1205 ist mit einem von zwei Eingängen eines Additionsgliedes 1207 verbunden. Der Ausgang dieses Additionsgliedes 1207 ist mit einer Klemme $r_0$ verbunden. Ein weiterer Ausgang der Schwellenschaltung 1204 ist mit einem ersten Eingang einer Wiederauffrischungs-Steuereinheit 1208 verbunden. Einem zweiten Eingang dieser Wiederauffrischungs-Steuereinheit 1208 wird über eine Klemme s ein Eingangssignal zugeführt. Mit einem weiteren Eingang der Wiederauffrischungs-Steuereinheit 1208 ist ein weiterer Speicher 1209 verbunden, dessen Ausgang mit einer Klemme $m_0$ verbunden ist. Ein erster Ausgang der Wiederauffrischungs-Steuereinheit 1208 ist mit einem zweiten Eingang der Schwellenschaltung 1204 verbunden, und ein zweiter Ausgang der Wiederauffrischungs-Steuereinheit 1208 ist mit einem Steuereingang eines Multiplexers 1210 verbunden. Dem Multiplexer 1210 werden über einen Eingang ein Signal aus einer Konstanteneinheit 1212 und über einen weiteren Eingang ein Signal aus einer weiteren Reduktionseinheit 1213 zugeführt, welcher letzteren über eine Klemme $c_t$ ein Steuersignal zugeführt wird. Der Ausgang des Multiplexers 1210 ist mit einem weiteren Speicher 1211 verbunden, dessen Ausgang an einen zweiten Eingang des Subtraktionsgliedes 1203 geführt ist, mit dem auch ein zweiter Eingang des Additionsgliedes 1207 verbunden ist.

FIG 5 zeigt, wie ebenfalls bereits erläutert, ein Blockschaltbild, aus dem ins einzelne gehend der Aufbau einer Zwischenstufe 13 bzw. 14 einer Vektorquantisiererkomponente des HMVQ-Coders hervorgeht. Diese Zwischenstufe enthält eine Reduktionseinheit 1301, einen Speicher 1302, ein Subtraktionsglied 1303, eine Schwellenschaltung 1304, eine Puffersteuereinheit 1305, einen Vektorquantisierer 1306, einen weiteren Speicher 1307, ein Additionsglied 1308, eine Wiederauffrischungs-Steuereinheit 1309, einen weiteren Speicher 1310, einen weiteren Speicher 1311, einen Multiplexer 1312, eine Expansionseinheit 1313 sowie eine weitere Reduktionseinheit 1314. Der Aufbau dieser Zwischenstufe ist im wesentlichen der gleiche wie der Aufbau der zuvor beschriebenen ersten Stufe, jedoch mit folgenden Ausnahmen: Zwischen die Reduktionseinheit 1301 und den Speicher 1302 ist eine Signalleitung geschaltet, die zu einer Klemme $x_l$ führt; die Schwellenschaltung 1304 weist gegenüber der entsprechenden Schwellenschaltung der ersten Stufe einen Steuereingang auf, über den aus der Puffersteuereinheit 1305 ein Steuersignal zugeführt wird, das in Abhängigkeit von dem Füllungsgrad des Puffers den Schwellenwert der Schwellenschaltung verändern kann; der Puffersteuereinheit 1305 wird über eine Klemme b ein Steuersignal zugeführt; der Wiederauffrischungs-Steuereinheit 1309, die der Wiederauffrischungs-Steuereinheit 1208 in FIG 4 entspricht, wird zusätzlich ein Steuersignal über eine Klemme $m_{l-1}$ zugeführt; statt der Konstanteneinheit 1212 in FIG 4 ist für die Zwischenstufe 13 bzw. 14 die Expansionseinheit 1313 vorgesehen, der ein Steuersignal über eine Klemme $\hat{x}_{l-1}$ zugeführt wird; schließlich ist gegenüber der Schaltungsanordnung für die erste Stufe in der Zwischenstufe 13 bzw. 14 ein zusätzlicher Signalausgang vorgesehen, der an den Ausgang der weiteren Reduktionseinheit 1314 angeschlossen ist und zu einer Klemme $c_l$ führt.

Wie bereits erläutert zeigt FIG 6 ein Blockschaltbild, aus dem ins einzelne gehend der Aufbau einer letzten Stufe 15 einer Vektorquantisiererkomponente des HMVQ-Coders hervorgeht. Diese Schaltungsanordnung umfaßt ein Subtraktionsglied 1501, eine Schwellenschaltung 1502, eine Puffersteuereinheit 1503, einen Vektorquantisierer 1504, einen Speicher 1505, ein Additions glied 1506, eine Wiederauffrischungs-Steuereinheit 1507, einen weiteren Speicher 1508, einen weiteren Speicher 1509, einen Multiplexer 1510, eine Expansionseinheit 1511, eine Bewegungskompensationseinheit 1512 und einen Bildblockspeicher 1513. Die Schaltungsanordnung für diese letzte Stufe 15 ist im wesentlichen gleich der Schaltungsanordnung für die Zwischenstufe 13 bzw. 14, jedoch mit folgenden Ausnahmen: Dem Subtraktionsglied 1501 ist weder eine Reduktionseinheit noch ein Speicher vorgeordnet, es ist vielmehr direkt mit einer Klemme x verbunden. Statt der weiteren Reduktionseinheit 1314, wie sie in FIG 5 dargestellt ist, ist in der letzten Stufe gemäß FIG 6 eine Anordnung vorgesehen, die aus einer Reihenschaltung des Bildblockspeichers 1513 und der Bewegungskompensationseinheit 1512 besteht; die Bewegungskompensationseinheit hat einen Seiteneingang, der mit einer Klemme v verbunden ist; der Bildblockspeicher 1513 ist mit dem Ausgang des Additionsgliedes 1506 verbunden, wohingegen der Ausgang des entsprechenden Additionsglieds 1308 gemäß FIG 5 mit einer Klemme $\hat{x}_\ell$ verbunden ist.

FIG 7 zeigt, wie ebenfalls bereits erläutert, ein Blockschaltbild einer Bewegungsanalyse-Einheit des HMVQ-Coders. Die Bewegungsanalyse-Einheit enthält einen Multiplexer 71, einen Bildblockspeicher 72, einen weiteren Bildblockspeicher 73, eine Schalteinheit 74, eine Bewegungssegmentierungs-Einheit 75, einen Speicher 76, eine Blockanpassungs-Einheit 77 sowie einen weiteren Speicher 78. Dem Multiplexer 71 wird über eine Klemme x ein Eingangssignal zugeführt, das wahlweise durch die Ausgänge des Multiplexers auf den ersten Bildblockspeicher 72 oder den zweiten Bildblockspeicher 73 übertragen wird. Der Ausgang des ersten Bildblockspeichers 72 ist mit einem ersten Eingang der Schalteinheit 74 verbunden, wohin gegen der Ausgang des zweiten Bildblockspeichers 73 mit einem zweiten Eingang der Schalteinheit 74 verbunden ist. Ein erster Ausgang der Schalteinheit 74 ist sowohl mit einem ersten Eingang der Bewegungssegmentierungs-Einheit 75, einem ersten Eingang der Blockanpassungs-Einheit 77 als auch einer Ausgangsklemme x verbunden. Ein zweiter Ausgang der Schalteinheit 74 ist sowohl mit einem zweiten Eingang der Bewegungssegmentierungs-Einheit 75 als auch mit einem zweiten Eingang der Blockanpassungs-Einheit 77 verbunden. Der Ausgang der Bewegungssegmentierungs-Einheit 75 ist mit dem Eingang des Speichers 76 verbunden, wohingegen der Ausgang der Blockanpassungs-Einheit 77 mit dem Eingang des weiteren Speichers 78 verbunden ist. Schließlich ist der Ausgang des ersten Speichers 76 mit einer Ausgangsklemme s und der Ausgang des zweiten Speichers 78 mit einer Ausgangsklemme v verbunden.

FIG 8 zeigt, wie bereits erläutert, eine - schematische Darstellung als Funktionsablaufs für eine Bewegt Unbewegt-Segmentierung gemäß dem erfindungsgemäßen Verfahren, wie er in der Bewegungssegmentierungs-Einheit 75 innerhalb der Bewegungsanalyse-Einheit abläuft. Die Bewegungssegmentierungs-Einheit 75 enthält ein Subtraktionsglied 751, eine Binärwertbildungs-Einheit 752, eine Rauschunterdrückungs-Einheit 753, eine Unterabtast-Einheit 754, eine Bereichsaufweitungs-Einheit 755, eine Löcherauffüll-Einheit 756, eine Bereichsschrumpfungs-Einheit 757 und ein Tiefpaßfilter 758. Dem Subtraktionsglied 751 wird über einen ersten Signaleingang das Signal des augenblicklichen Bildes und über einen zweiten Signaleingang das Signal des betreffenden vorhergehenden Bildes zugeführt. Der Signalausgang des Subtraktionsgliedes 751 ist an den Eingang der Binärwertbildungs-Einheit 752 geführt. Der Ausgang der Binärwertbildungs-Einheit 752 ist mit dem Eingang der Rauschunterdrückungs-Einheit 753 verbunden, deren Ausgang mit dem Eingang der Unterabtast-Einheit 754 verbunden ist. Der Ausgang der Unterabtast-Einheit 754 ist mit dem Eingang der Bereichsaufweitungs-Einheit 755 verbunden, deren Ausgang an den Eingang der Löcherauffüll-Einheit 756 geführt ist. Der Ausgang dieser Löcherauffüll-Einheit 756 ist mit dem Eingang der Bereichsschrumpfungs-Einheit 757 verbunden, deren Ausgang an den Eingang des Tiefpaßfilters 758 angeschlossen ist. Schließlich wird über eine Klemme das Ausgangssignal des Tiefpaßfilters, nämlich das Segmentierungsmaskensignal s, abgeführt.

FIG 9 zeigt, wie bereits erläutert, eine suchbaumähnliche schematische Struktur mit sechs Hierarchie-Stufen 0... 5, die eine Datenstruktur eines $32 \times 32$ pel-Blocks im Rahmen des HMVQ-Verfahrens darstellt.

FIG 10 zeigt, wie ebenfalls bereits erläutert, eine erläuternde Darstellung der Beziehungen der verschiedenen Codier-Modie und deren Übergänge. Die entsprechenden Übergangs-Codes a, b, c, d, e, f u. g haben jeweils die Form 0, 10, 110, 1110, 11110, 111110 bzw. 111111, wobei die letzen drei Codes nämlich e = 11110, f = 111110 und g = 111111 sog. Stop-Codes darstellen.

FIG 11 zeigt, wie bereits erläutert, ein Blockschaltbild eines für das erfindungsgemäße Verfahren verwendbaren HMVQ-Decoders 2. Der Decoder 2 enthält einen Pufferspeicher 21, einen Decoder 22, einen Demultiplexer 23, eine erste IVQ-Stufe 24, mehrere Zwischen-IVQ-Stufen 25... 26, eine letzte IVQ-Stufe 27 und einen D/A-Wandler 28. Dem Eingang des Pufferspeichers 21, der mit einer Klemme "Dateneingang" verbunden ist, werden einlaufende Daten zugeführt. Der Ausgang des Pufferspeichers 21 ist mit dem Eingang des Decoders 22 verbunden, dessen Ausgang mit dem Eingang des Demultiplexers 23 verbunden ist. Ein erster Ausgang des Demultiplexers 23 ist mit der ersten IVQ-Stufe 24 verbunden, ein zweiter Ausgang des Demultiplexers 23 ist mit einer ersten Zwischen-IVQ-Stufe 25, ein dritter Ausgang des Demultiplexers 23 ist mit der letzten in der kaskadenartigen Anordnung von IVQ-Stufen vorgesehenen Zwischen-IVQ-Stufe 26 verbunden, und ein vierter Ausgang des Demultiplexers 23 ist mit dem Eingang der letzten IVQ-Stufe 27 verbunden. Der Ausgang der ersten IVQ-Stufe 24 ist mit einem weiteren Eingang der Zwischen-IVQ-Stufe 25 verbunden, während ein Ausgang dieser Zwischen-IVQ-Stufe 25 mit einem weiteren Eingang der weiteren Zwischen-IVQ-Stufe 26 verbunden ist. Ein Ausgang der zuletzt genannten Zwischen-IVQ-Stufe 26 ist mit einem weiteren Eingang der letzten IVQ-Stufe 27 verbunden. Ein weiterer Ausgang der zuerst genannten Zwischen-IVQ-Stufe 25 ist mit einem weiteren Eingang der ersten IVQ-Stufe 24 verbunden, während ein weiterer Ausgang der zuletzt genannten Zwischen-IVQ-Stufe 26 mit einem weiteren Eingang der zuerst genannten Zwischen-IVQ-Stufe 25 verbunden ist und ein erster Ausgang der letzten IVQ-Stufe 27 mit einem weiteren Eingang der zuletzt genannten Zwischen-IVQ-Stufe 26 verbunden ist. Ein zweiter Ausgang der letzten IVQ-Stufe 27 ist mit dem Eingang D/A-Wandlers 28 verbunden, dessen Ausgang mit einer Klemme "Video-Ausgang" verbunden ist.

FIG 12 zeigt, wie bereits erläutert, ein Blockschaltbild einer ersten Stufe 24 einer Rekonstruktionseinheit des HMVQ-Decoders. Diese erste Stufe 24 enthält ein Codebuch 241, einen Speicher 242, ein Additionsglied 243, einen weiteren Speicher 244, einen Multiplexer 245, eine Konstantenschaltung 246, eine Reduktionseinheit 247, eine Wiederauffrischungs-Steuereinheit 248 und einen weiteren Speicher 249. Dem Codebuch 241 wird über eine Klemme $i_0$ ein Eingangssignal zugeführt. Ein Ausgangssignal des Codebuchs wird dem Eingang des Speichers 242 zugeführt. Der Ausgang dieses Speichers 242 ist mit einem ersten Eingang des Additionsgliedes 243 verbunden, dessen zweiter Eingang mit dem Ausgang des weiteren Speichers 244 verbunden ist. Dem weiteren Speicher 244 wird ein Ausgangssignal des Multiplexers 245 zugeführt. Mit einem ersten Eingang dieses Multiplexers 245 ist ein Ausgang der Konstantenschaltung 246 verbunden, während mit einem weiteren Eingang des Multiplexers 245 ein Ausgang der Reduktionseinheit 247 verbunden ist, der von einer Klemme $c_1$ ein Steuersignal zugeführt wird. Das Ausgangssignal des Additionsgliedes 243 wird an eine Klemme $\hat{x}_0$ gelegt. Ein Signal, das an eine Klemme $m_0$ gelegt wird, wird an den Eingang der Wiederauffrischungs-Steuereinheit 248 geführt, deren Ausgang mit dem Eingang des weiteren Speichers 249 verbunden ist. Schließlich ist der Ausgang dieses weiteren Speichers 249 mit einem Seiteneingang des Multiplexers 245 verbunden.

FIG 13 zeigt, wie bereits erläutert, ein Blockschaltbild einer Zwischenstufe 25 bzw. 26 der Rekonstruktionseinheit des HMVQ-Decoders. Diese Zwischenstufen 25 bzw. 26 enthalten jeweils ein Codebuch 251, einen Speicher 252, ein Additionsglied 253, einen weiteren Speicher 254, einen Multiplexer 255, eine Expansions-Einheit 256, eine Reduktions-Einheit 257, eine Wiederauffrischungs-Steuereinheit 258 und einen weiteren Speicher 259. Der Aufbau dieser Zwischenstufe ist im wesentlichen der gleiche wie derjenige der ersten Stufe gemäß FIG 12, jedoch mit der Ausnahme, daß statt der Konstantenschaltung 246 in FIG 12 die Expansions-Einheit 256 vorgesehen ist, der über eine Klemme $\hat{x}_{\ell-1}$ ein Steuersignal zugeführt wird, sowie daß am Ausgang der Reduktions-Einheit 257 im Gegensatz zu der Schaltungsanordnung gemäß FIG 12 ein Ausgangssignal abgeführt wird, das einer Klemme $c_\ell$ zugeführt wird.

FIG 14 zeigt, wie bereits erläutert, ein Blockschaltbild einer Endstufe 27 der Rekonstruktionseinheit des HMVQ-Decoders. Diese Endstufe 27 enthält ein Codebuch 2701, einen Speicher 2702, ein Additionsglied 2703, einen Bildblockspeicher 2704, einen weiteren Speicher 2705, einen Multiplexer 2706, eine Expansions-Einheit 2707, eine Bewegungskompensations-Einheit 2708, eine Wiederauffrischungs-Steuereinheit 2709 und einen weiteren Speicher 2710. Dem Codebuch 2701 wird über eine Klemme $i_\ell$ ein Eingangssignal zugeführt, und ein Ausgangssignal des Codebuchs 2701 wird dem Eingang des Speichers 2702 zugeführt. Der Ausgang des Speichers 2702 ist mit einem ersten Eingang des Additionsgliedes 2703 verbunden, dessen zweiter Eingang mit dem Ausgang des weiteren Speichers 2705 verbunden ist. Der Ausgang des Additionsgliedes 2703 ist mit dem Eingang des Bildblockspeichers 2704 verbunden, während der Ausgang des Bildblockspeichers 2704 zum einen mit einer Ausgangsklemme $\hat{x}_\ell$ und zum anderen mit einem Eingang der Bewegungskompensations-Einheit 2708 verbunden ist. Der Ausgang der Bewegungskompensations-Einheit 2708 ist mit einem ersten Eingang des Multiplexers 2706 und mit einer Ausgangsklemme $c_\ell$ verbunden. An einen zweiten Eingang des Multiplexers 2706 ist ein Ausgang der Expansions-Einheit 2707 angeschlossen, deren Eingang mit einer Eingangsklemme $\hat{x}_{\ell-1}$ verbunden ist. Der Ausgang des Multiplexers 2706 ist mit dem Eingang des weiteren Speichers 2705 verbunden. Der Wiederauffrischungs-Steuereinheit 2709 wird über eine Eingangs klemme $m_\ell$ ein Steuersignal zugeführt, während der Ausgang dieser Wiederauffrischungssteuer-Einheit 2709 mit dem Eingang des weiteren Speichers 2710 verbunden ist. Der Ausgang dieses weiteren Speichers 2710 ist mit einem Seiteneingang des Multiplexers verbunden. Schließlich ist eine weitere Eingangsklemme v mit einem Seiteneingang der Bewegungskompensations-Einheit 2708 verbunden.

FIG 15 zeigt, wie bereits erläutert, eine prinzipielle Darstellung einer Zwei-Paß-Blocküberlappungs-Interpolation im Rahmen des erfindungsgemäßen Verfahrens. Ein Funktionsschritt "Expandieren" enthält, wie im oberen Teil von FIG 15 ersichtlich, einen Schritt zum Interpolieren, an den sich ein Schritt zum Reduzieren anschließt. An den Schritt des Reduzierens schließt sich ein Schritt zum Subtrahieren an, dem ein weiterer Schritt zum Interpolieren folgt. Parallel zu den Schritten zum anfänglichen Interpolieren und Reduzieren ist ein Schritt zum Multiplizieren mit zwei vorgesehen, wobei das Multiplikationsergebnis in dem Schritt zum Subtrahieren mit dem Reduktionsergebnis aus dem Schritt zum Reduzieren verarbeitet wird. Im unteren Teil von FIG 15 sind - schematisch die Funktionen zum Reduzieren bzw. zum Interpolieren dargestellt.

FIG 16 zeigt, wie bereits erläutert, eine prinzipielle Gesamtdarstellung der hierarchischen, mehrstufigen Vektorquantisierung im Rahmen des HMVQ-Verfahrens gemäß der vorliegenden Erfindung. In dem linken Teil dieser Figur sind die Funktionen dargestellt, wie sie in dem Coder abgewickelt werden, während in dem rechten Teil der Figur die Funktionen bzw. Funktionsblöcke dargestellt sind, wie sie in dem Decoder ablaufen bzw. vorgesehen sind.

Abschließend seien die vorteilhaften Eigenschaften des erfindungsgemäßen Verfahrens angegeben:

- progressiver Bildaufbau
- keine "Blocking"-Effekte (blockübergreifendes Verfahren),
Artefakte auf 4×4 pel begrenzt
- Worst-Case-Bildqualtität (100 % Bewegung): tiefpaßgefiltertes Bild mit $f_g = 1/8\ f_o$, wobei $f_g$ die Grenzfrequenz und $f_o$ die höchste im Originalbild auftretende Frequenz bedeuten,
- Bewegungskompensation auf 4×4 pel genau mit einem 16×16 Blockmatching-Algorithmus
- Steuerung der Bildauflösung durch eine zentrale Bewegt-/Unbewegt Berechnung mit Rauschbefreiung.
- Einfache Filterstruktur (Abtastung über Mittelwertberechnung, Interpolation über FIR (Finite Impulse Respond) - Filter mit 6 Koeffizienten
- kaskadierte Vektorquantisierung mit kleinen Codebüchern
- geschlossene Quantisierung von YUV
- geschlossene Codierung der Steuerinformation der Progressionstufen durch eine "Top-down Bottom-up Quad-tree"-Codierung
- Leicht decodierbare Codes (max. Codewortlänge = 3 bit)
- Einfache Empfängerstruktur

## Ansprüche

1. Verfahren zur Datenreduktion digitaler Bildsequenzen in hierarchischer Weise mittels eines mehrstufigen Coders durch Vektorquantisierung und Bewegungskompensation sowie Rekonstruktion dieser Bildsequenzen mittels eines mehrstufigen Decoders, dadurch **gekennzeichnet,** daß in an sich bekannter Weise ein Eingangsbildsignal durch eine Kaskade von L gleichen Tiefpaßfiltern mit anschließender Unterabtastung in einer Anzahl von Bildsignalen unterschiedlicher Ortsauflösung dargestellt wird, wobei mit jeder Kaskadenstufe die Ortsauflösung und das Datenvolumen des Eingangsbildsignals in horizontaler und vertikaler Richtung jeweils um einen Faktor R reduziert werden und wobei das Eingangsbildsignal mit "Auflösungsstufe L" und das tiefpaßgefilterte Bildsignal mit der kleinsten Auflösung mit "Auflösungsstufe 0" bezeichnet werden, daß das zeitlich vorangehende, rekonstruierte, bewegungskompensierte Bildsignal in gleicher Weise in einer Anzahl von Bildsignalen unterschiedlicher Ortsauflösung dargestellt wird, daß die Abtastwerte der Auflösungsstufen in Blöcke unterteilt werden, wobei die "Auflösungsstufe 0" die Blockgröße "1×1" hat und für die folgenden mit jeder weiteren Auflösungsstufe die Blockgröße um den Faktor R horizontal und vertikal erhöht wird, jedoch ein Block maximal die Blockgröße N×N annimmt, daß korrespondierende Bildsignale des Eingangsbildsignals und des rekonstruierten, bewegungskompensierten Bildsignals beginnend mit "Auflösungsstufe 0" sukzessive jeweils miteinander verglichen werden, wobei die Vergleichsvorgänge blockweise durchgeführt werden, und daß sobald die Differenz korrespondierender Bildsignale einen vorgegebenen Schwellwert überschreitet, eine Umschaltung des Codiermodus erfolgt, wobei von der aktuellen Auflösungsstufe des Eingangsbildsignals an beginnend die Differenz zu der interpolierten vorausgegangenen Auflösungsstufe des Eingangsbildsignals gebildet wird, wobei die Interpolation mehrstufig erfolgt, und sobald die im folgenden zu bildende Differenz einen vorgegebenen Schwellwert überschreitet, die Differenz quantisiert und ausgegeben wird, wobei in der "Auflösungsstufe 0" die Differenz skalar quantisiert wird und in allen weiteren "Auflösungsstufen 1...L" die Differenz vektorquantisiert wird.

2. Verfahren nach Anspruch 1, dadurch **gekennzeichnet,** daß der vorgegebene Schwellwert (1304, 1502) mit dem Füllungsgrad eines Pufferspeichers veränderbar ist (1305, 1503).

3. Schaltungsanordnung zur Durchführung des Verfahrens nach Anspruch 1 oder 2, dadurch **gekennzeichnet,** daß die Anzahl von in der Kaskade (12, 13... 14, 15; 24, 25... 26, 27) enthaltenen Zwischenstufen (13... 14; 25... 26) zwei beträgt.

4. Schaltungsanordnung zur Durchführung des Verfahrens nach Anspruch 1 oder 2, dadurch **gekennzeichnet** daß die Anzahl von in der Kaskade (12, 13... 14, 15; 24... 25, 26, 27) enthaltenen Zwischenstufen (13... 14; 25... 26) zumindest drei beträgt.

5. Schaltungsanordnung zur Durchführung des Verfahrens nach Anspruch 1 oder 2, dadurch **gekennzeichnet,** daß der Coder (1) eine Bewegungsanalyse-Einheit (16) enthält, die ein Ausgangssignal (s) aufgrund einer Bewegungsanalyse erzeugt, das zur Steuerung der Arbeitsweise der Vektorquantisierer-Stufenkaskade (12, 13... 14, 15) verwendet wird.

6. Schaltungsanordnung nach Anspruch 5, dadurch**gekennzeichnet,** daß die Bewegungsanalyse-Einheit (16) eine Bewegungssegmentierungs-Einheit (75) enthält, in der die Bildsignale eines augenblicklichen Bildes und eines diesem vorhergehenden Bildes voneinander subtrahiert (751) werden und das Subtraktionsergebnis nacheinander einer Binärwertbildung (752), einer Rauschunterdrückung (753), einer Unterabtastung (754), einer Bereichsaufweitung (755), einer Löcherauffüllung (756), einer Bereichsschrumpfung (757) und einer Tiefpaßfilterung unterzogen wird, um ein Segmentierungsmaskensignal (s) zu erzeugen.

7. Schaltungsanordnung zur Durchführung des Verfahrens nach Anspruch 1 oder 2, dadurch **gekennzeichnet,** daß für über den Kanal zu übertragende Signalbestandteile Codes aus einem Codebuch (241) verwendet werden.

8. Schaltungsanordnung nach Anspruch 7, dadurch **gekennzeichnet,** daß das Codebuch in Form eines ROM realisiert ist.

9. Schaltungsanordnung nach Anspruch 7,dadurch **gekennzeichnet,** daß das Codebuch in Form eines PROM realisiert ist.

FIG 1

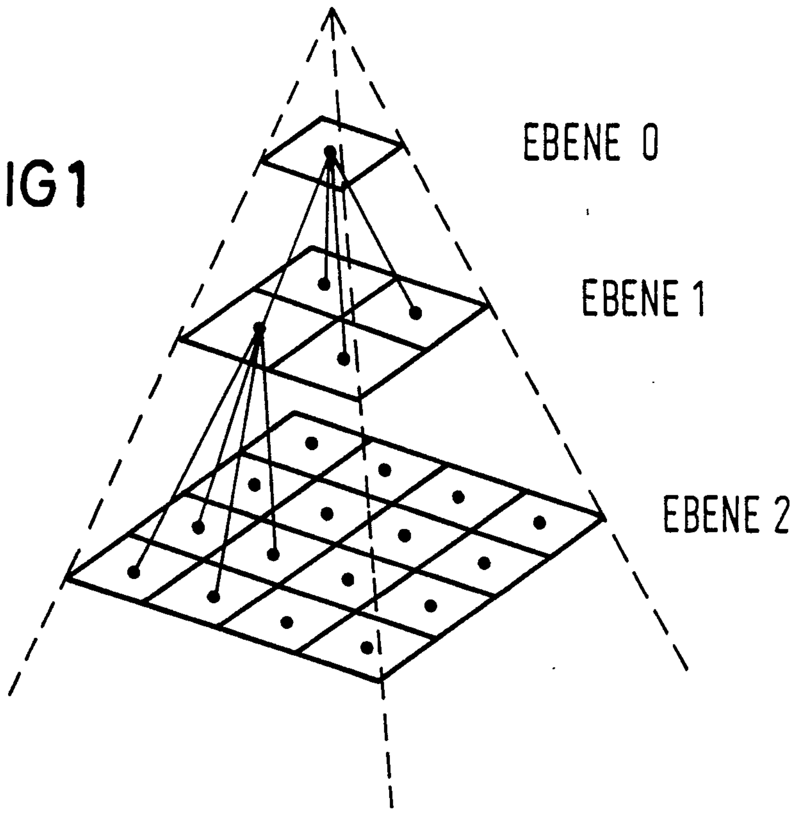


(STAND DER TECHNIK)

FIG 2

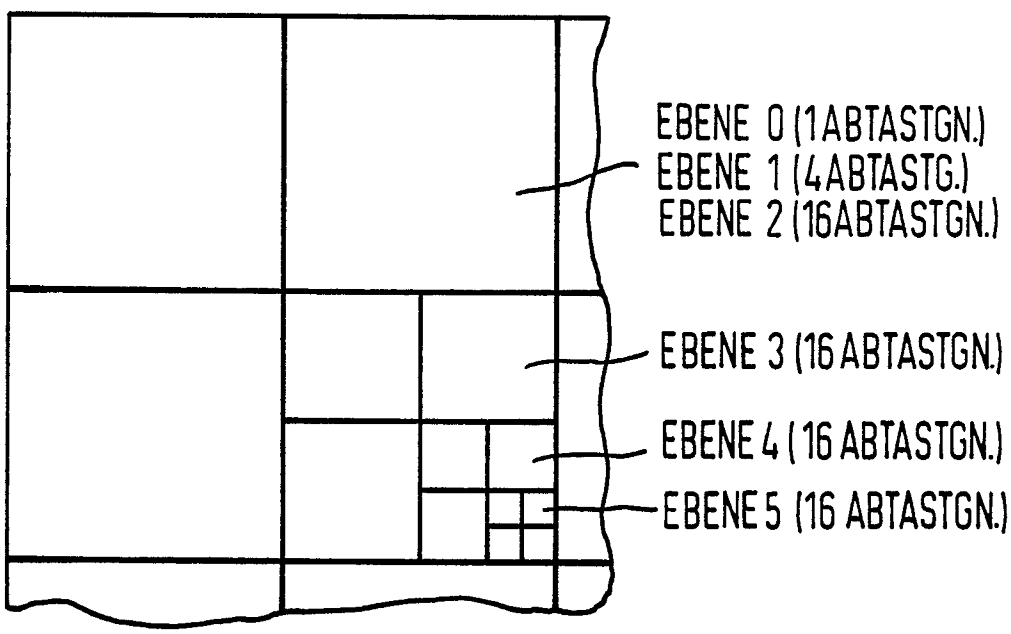

FIG 3

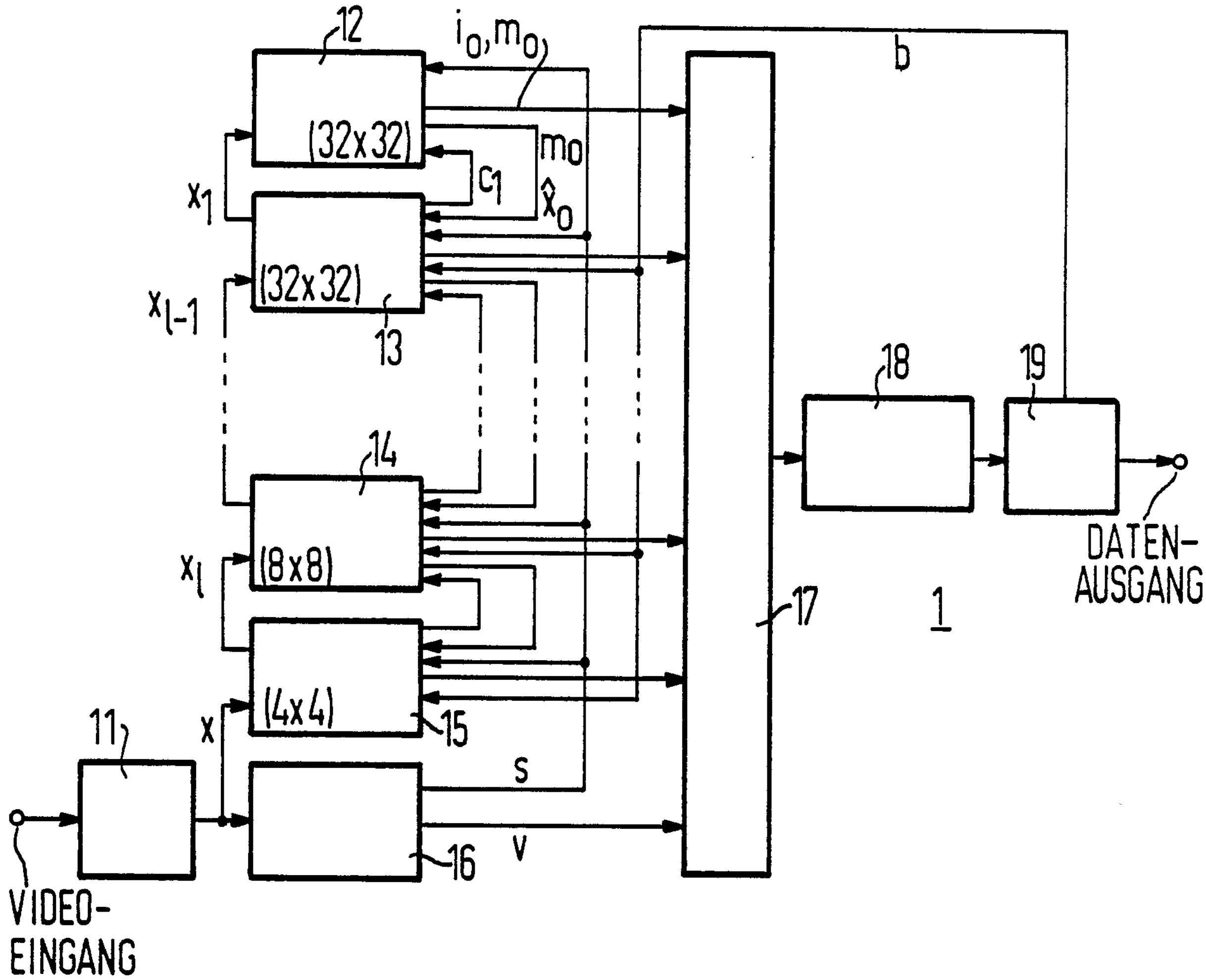
12
$i_0, m_0$
(32x32)
$m_0$
$c_1$
$\hat{x}_0$
$x_1$
(32x32)
$x_{l-1}$
13
14
(8x8)
$x_l$
(4x4)
15
11
x
s
v
16
b
17
18
19
1
VIDEO-
EINGANG
DATEN-
AUSGANG

FIG 4

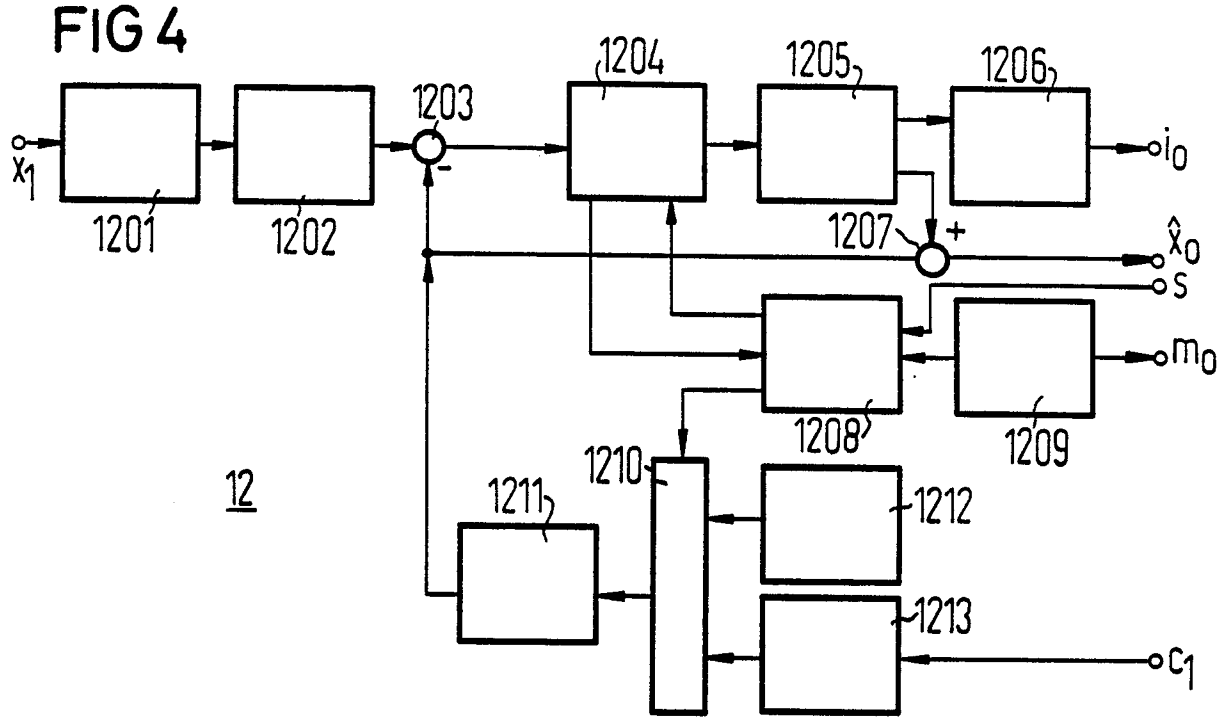
1201
1202
1203
1204
1205
1206
1207
1208
1209
1210
1211
1212
1213
$x_1$
$i_0$
$\hat{x}_0$
s
$m_0$
$c_1$
12

FIG 5

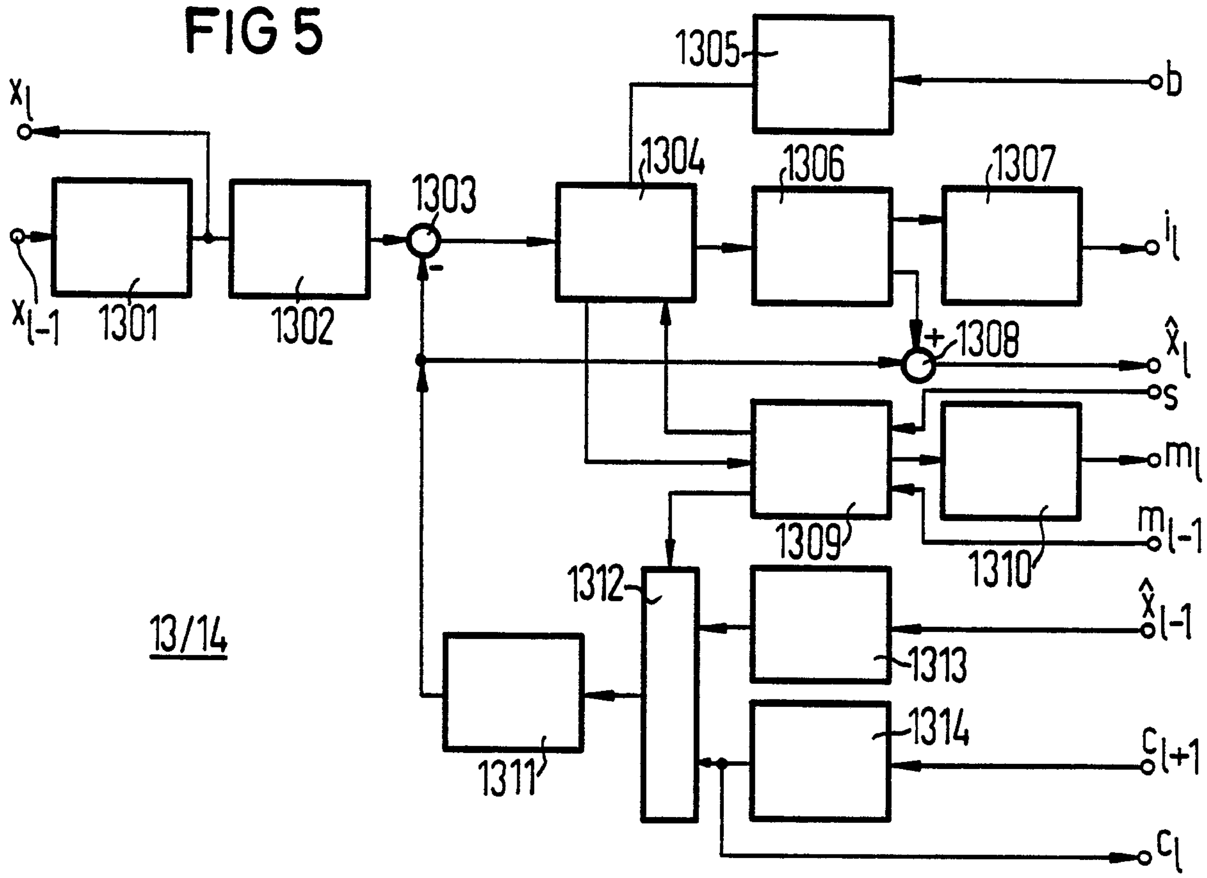
1301
1302
1303
1304
1305
1306
1307
1308
1309
1310
1311
1312
1313
1314
$x_l$
$x_{l-1}$
b
$i_l$
$\hat{x}_l$
s
$m_l$
$m_{l-1}$
$\hat{x}_{l-1}$
$c_{l+1}$
$c_l$
13/14

FIG 6

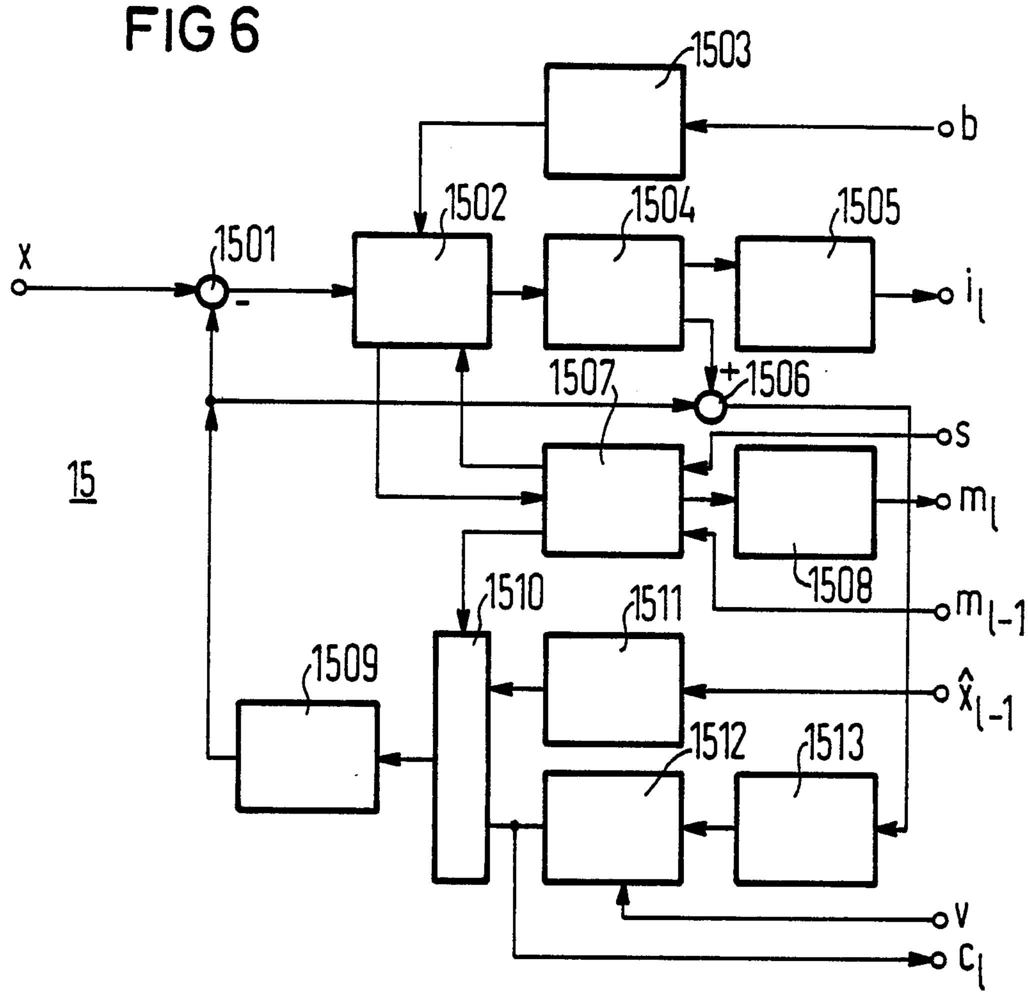
1503
b
1502
1504
1505
x
1501
-
i_l
1507
+
1506
s
15
m_l
1508
m_l-1
1510
1511
1509
x̂_l-1
1512
1513
v
c_l

FIG 7

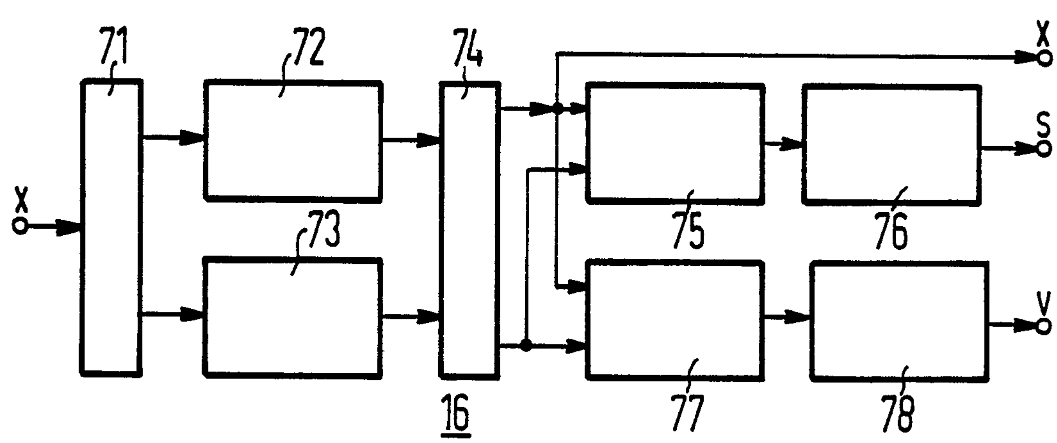
71
72
74
x
x
s
73
75
76
v
16
77
78

FIG 8

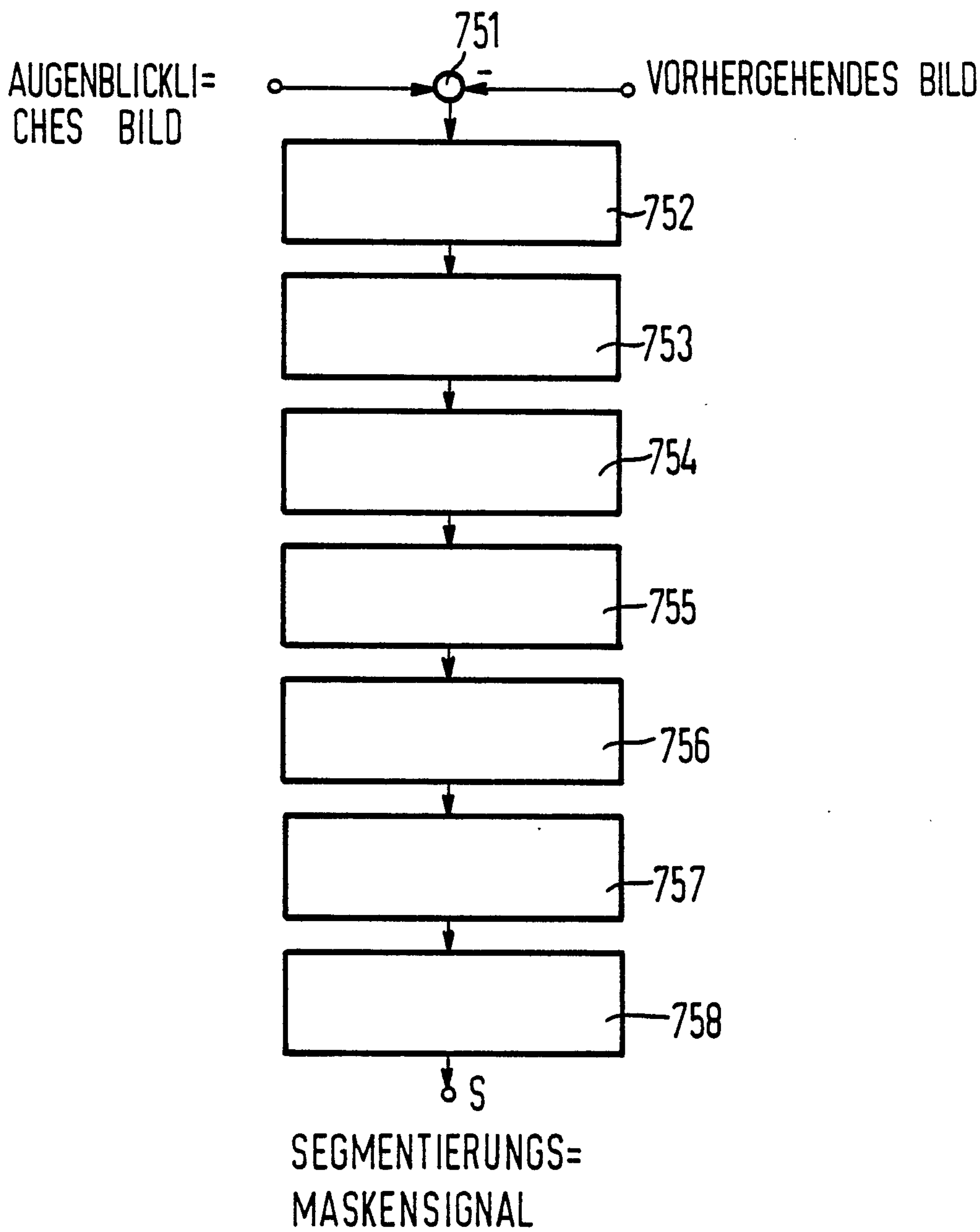
751
AUGENBLICKLI=
CHES BILD
VORHERGEHENDES BILD
752
753
754
755
756
757
758
S
SEGMENTIERUNGS=
MASKENSIGNAL

FIG 9

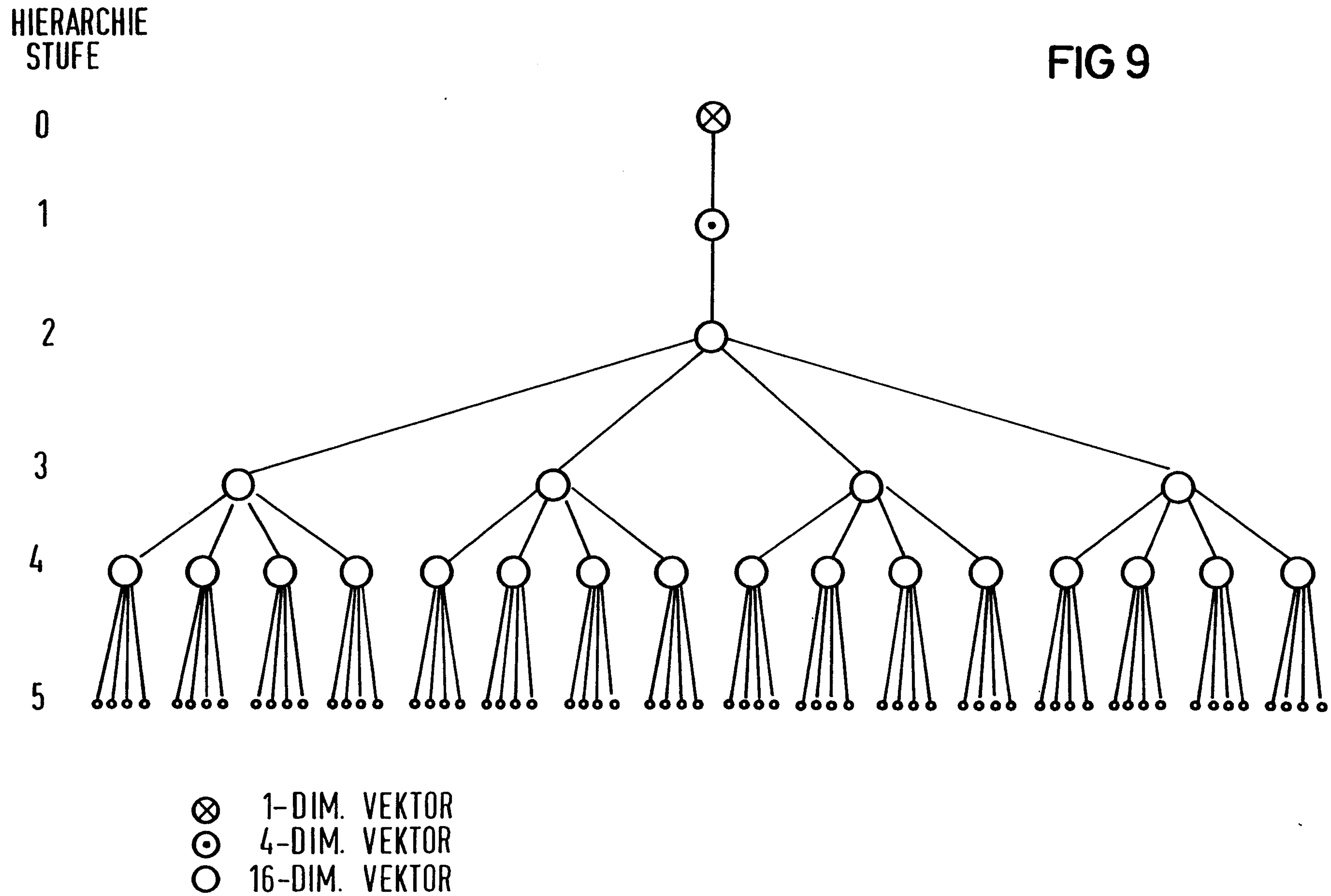
HIERARCHIE
STUFE
0
1
2
3
4
5
1-DIM. VEKTOR
4-DIM. VEKTOR
16-DIM. VEKTOR

FIG 10

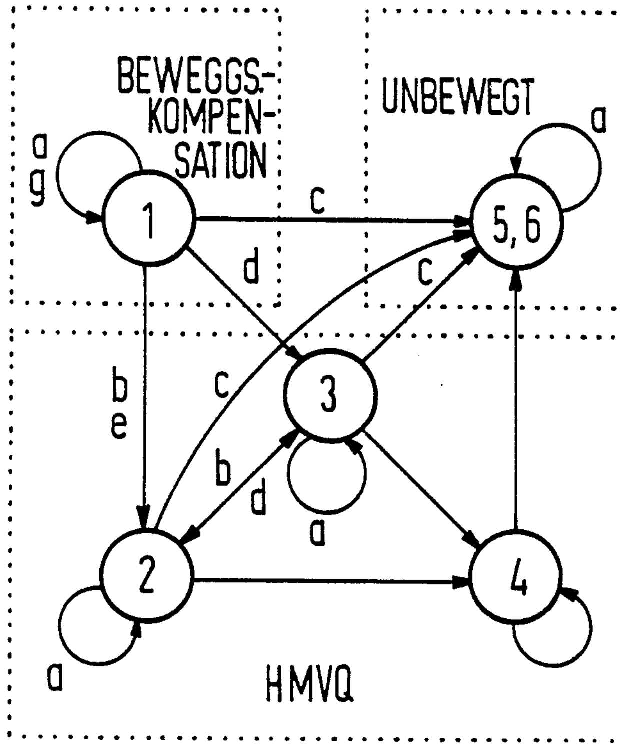


1 $A(e_{i,0}) < VTH$

2 $A(e_{i,1}) < VTH$ (flat area)

3 $VTH < A(e_{i,1}) > BTH$

(VQ of $e_{i,1}$)

(4) $VTH \quad A(e_{i,1}) < BTH$

TIEFPASSFILTERUNG

5 unmoved area UNBEWEGTER BEREICH

(6) unmoved area, 1p filtered

VTH: visual threshold

BTH: buffer control thresh.

e : prediction error

$e_{i,k} = x_i - \text{expand}(\hat{x}_{i-k})$

A( ): activity index

$A(e_{i,k}) = \max_i(e_{i,k}) - \min_i(e_{i,k})$

( ) used for coder control only

FIG 11

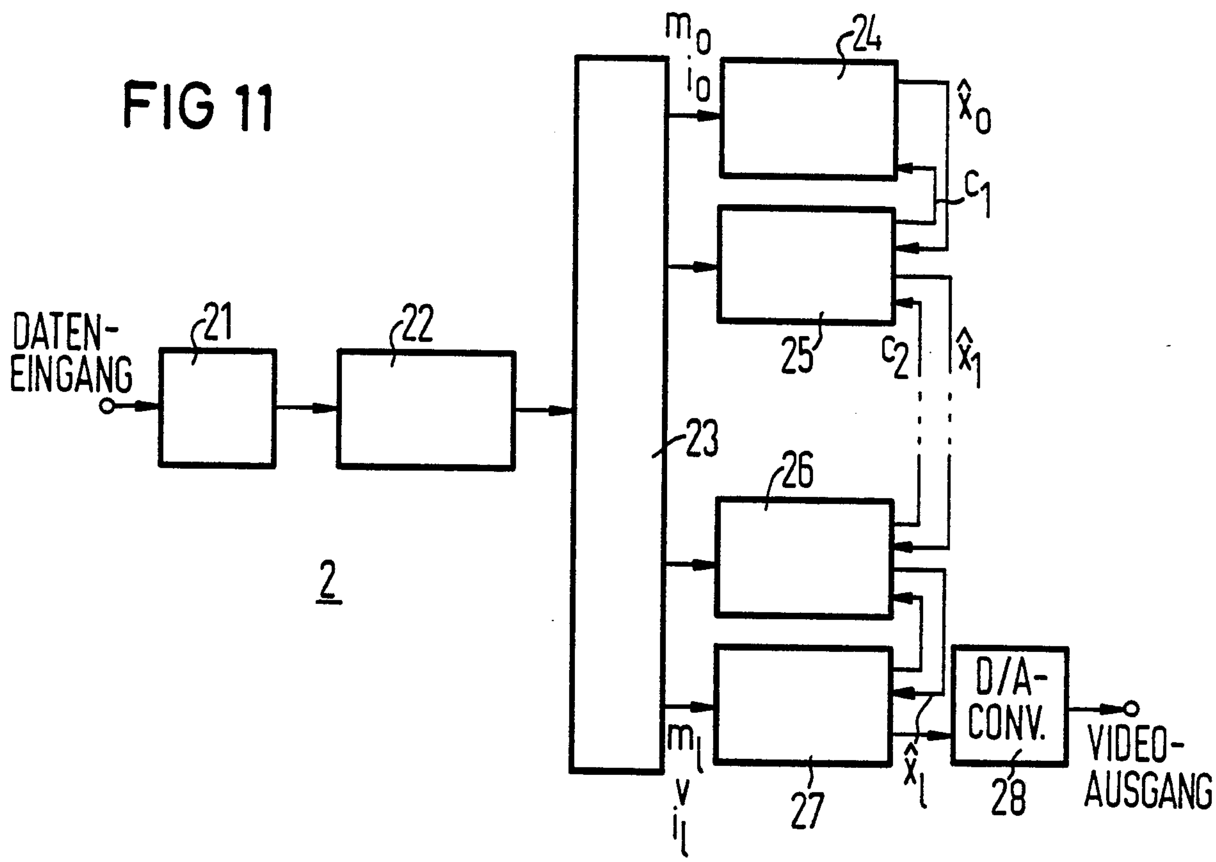
DATEN-
EINGANG
21
22
23
24
25
26
27
28
D/A-
CONV.
VIDEO-
AUSGANG
2

FIG 12

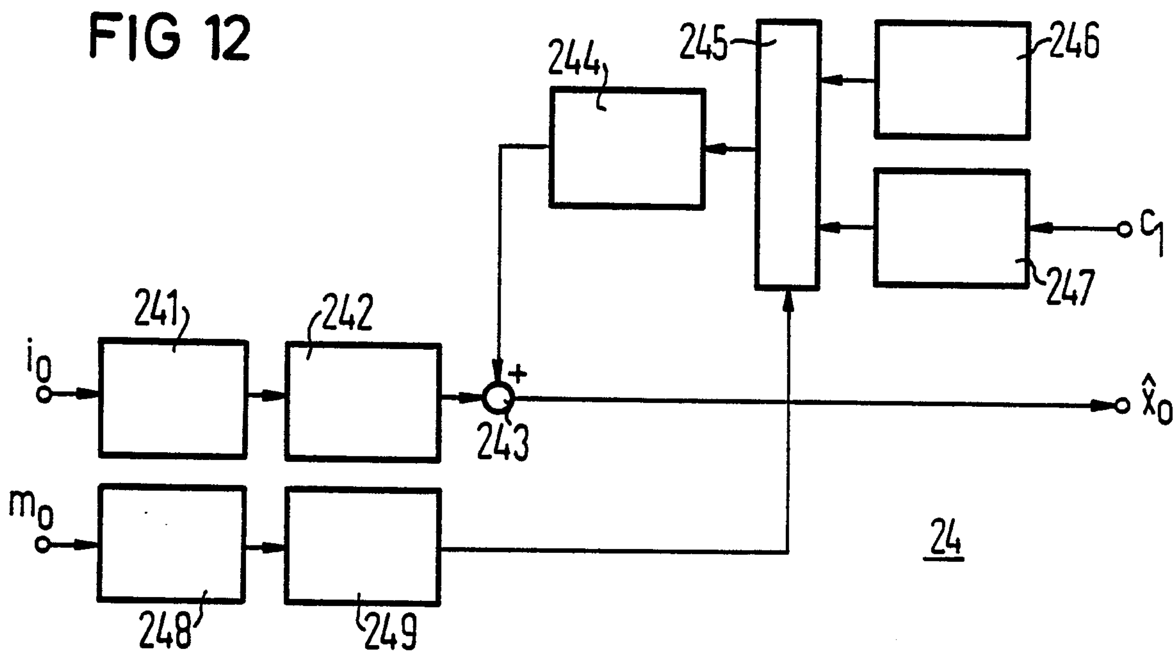
241
242
243
244
245
246
247
248
249
24

FIG 13

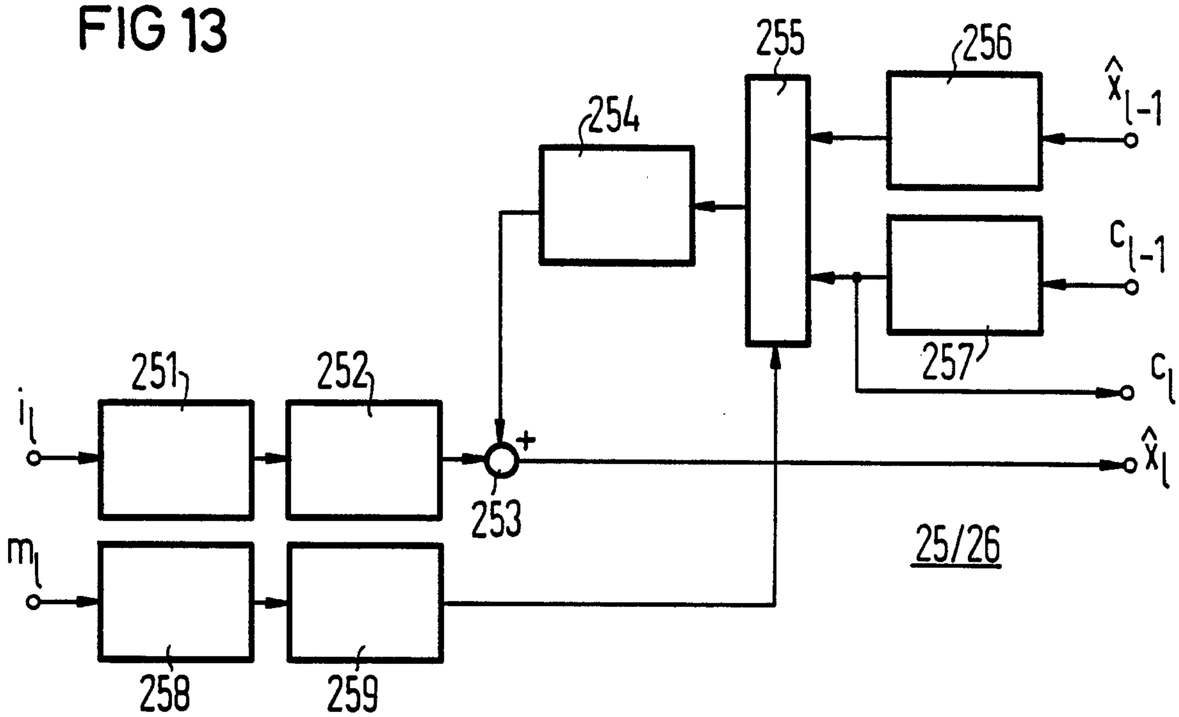


25/26

FIG 14

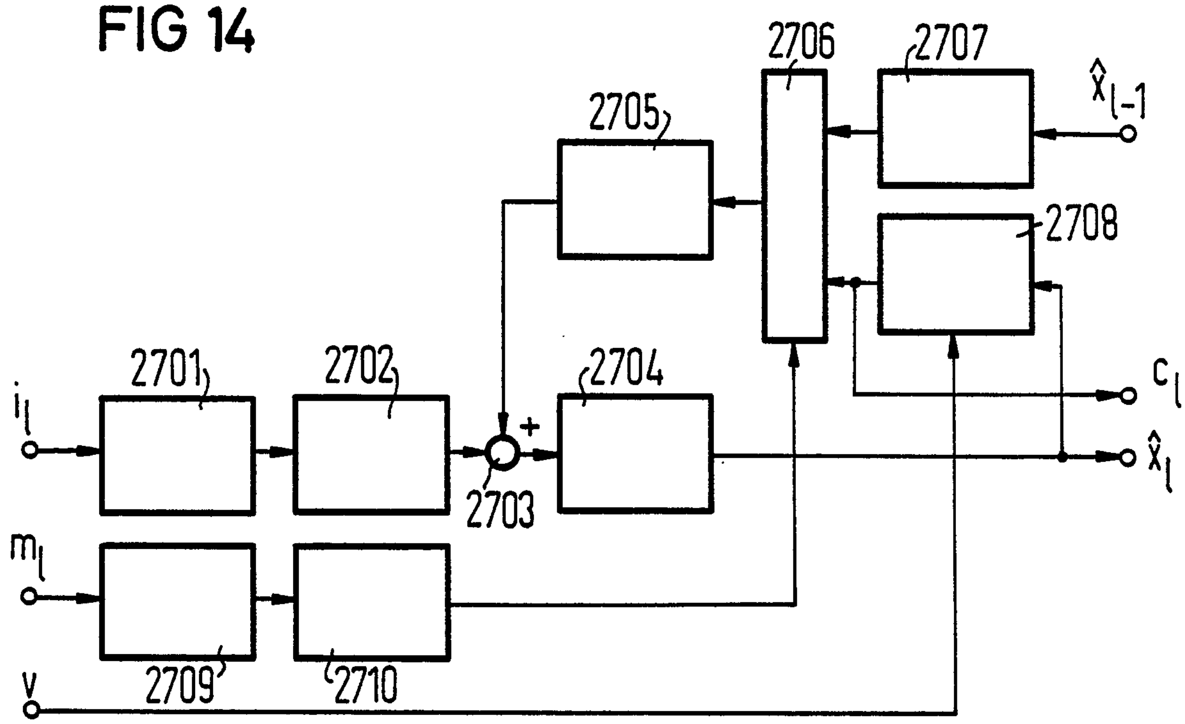

FIG 15

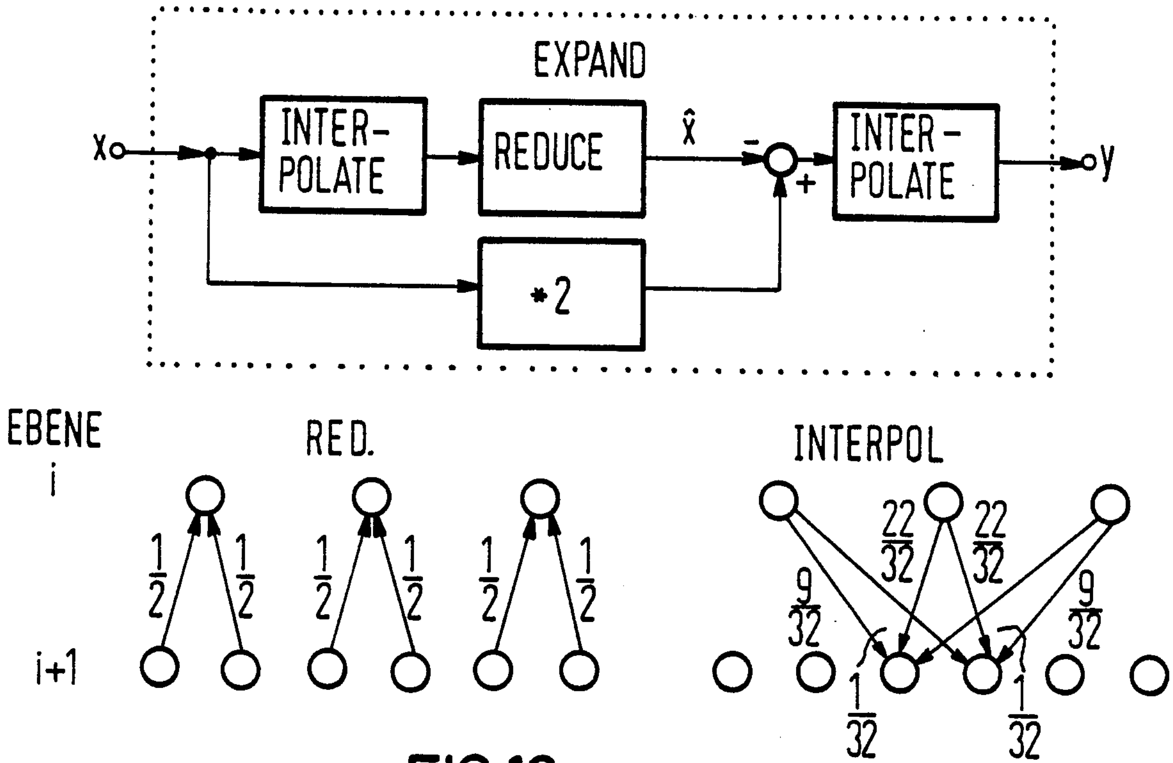
EXPAND
x
INTER-
POLATE
REDUCE
x̂
-
+
INTER-
POLATE
y
*2
EBENE
i
RED.
INTERPOL
i+1
1/2
22/32
9/32
1/32

FIG 16

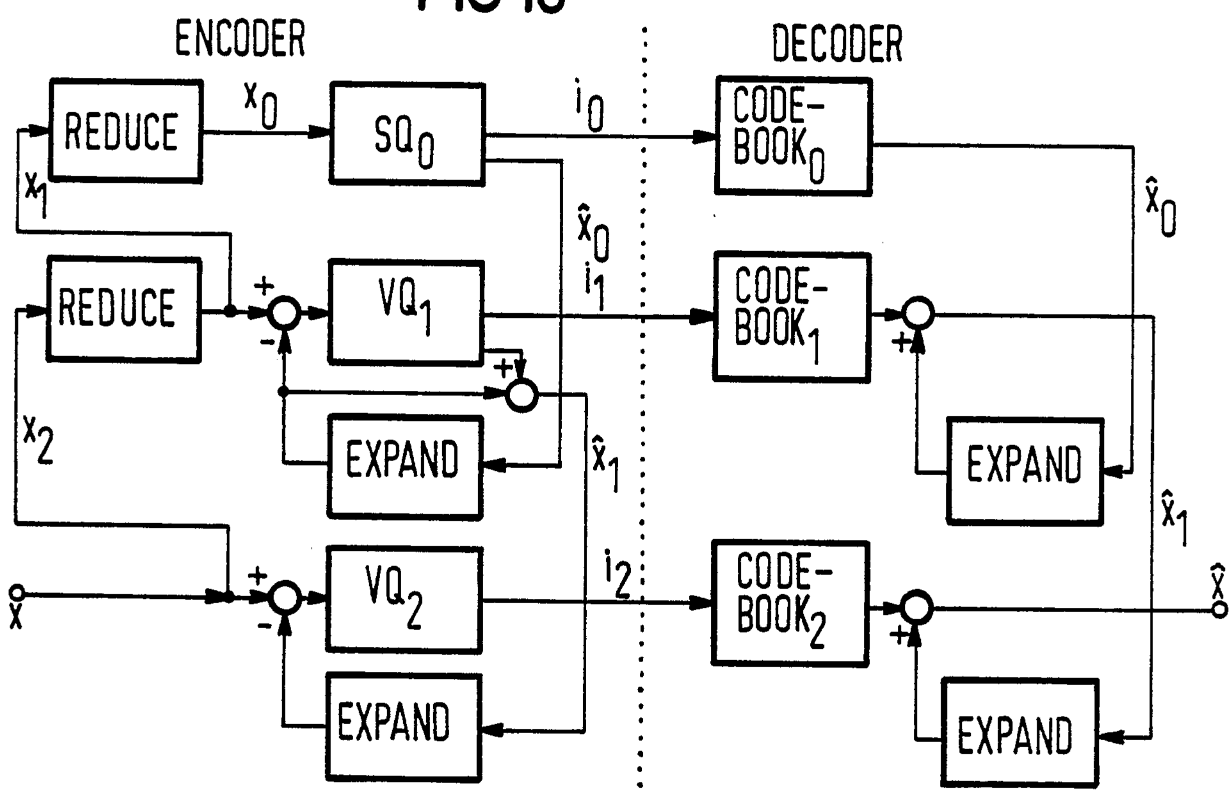
ENCODER
DECODER
REDUCE
$x_0$
$SQ_0$
$i_0$
CODE-
$BOOK_0$
$x_1$
$\hat{x}_0$
$\hat{x}_0$
REDUCE
$VQ_1$
$i_1$
CODE-
$BOOK_1$
EXPAND
$x_2$
$\hat{x}_1$
EXPAND
$\hat{x}_1$
x
$VQ_2$
$i_2$
CODE-
$BOOK_2$
$\hat{x}$
EXPAND
EXPAND
+
-